# FASCICULE DE BREVET EUROPEEN

(11) **EP 1 846 154 B1**
(45) Date de publication et mention de la délivrance du brevet: **24.07.2013**
(21) Numéro de dépôt: 06709064.7
(22) Date de dépôt: 19.01.2006
(51) Int. Cl.: B01J 23/85, B01J 23/88, B01J 23/94, B01J 38/52, B01J 37/20, C10G 45/08, B01J 37/02, C10G 47/06, C10G 47/10, C10G 47/12, B01J 31/02, C10G 45/04

(54) **CATALYSEUR D'HYDROTRAITEMENT, SON PROCEDE DE PREPARATION ET SON UTILISATION**
HYDRIERUNGSKATALYSATOR, DESSEN HERSTELLUNG UND VERWENDUNG
HYDROTREATMENT CATALYST, METHOD FOR THE PREPARATION THEREOF, AND USE OF THE SAME

(30) Priorité: 20.01.2005 FR 0500577
(43) Date de publication de la demande: 24.10.2007
(73) Titulaire: TOTAL RAFFINAGE MARKETING, 92800 Puteaux (FR); IFP Energies nouvelles, 92852 Rueil-Malmaison Cedex (FR)
(72) Inventeur: CHOLLEY, Thierry, F-76600 Le Havre (FR); DATH, Jean-Pierre, B-7970 Beloeil Hainault (BE); BRUN, Claude, F-64320 Idron (FR); FREMY, Georges, F-64390 Sauveterre de Bearn (FR); HUMBLOT, Francis, F-64300 Lanneplaa (FR)
(74) Mandataire: Largeau, Béatrice
(86) Numéro de dépôt international: PCT/FR2006/000054
(87) Numéro de publication internationale: WO 2006/077302

(56) Documents cités:
- EP-A- 0 482 817
- EP-A- 1 418 002
- PATENT ABSTRACTS OF JAPAN vol. 1995, no. 03, 28 avril 1995 (1995-04-28) & JP 06 339635 A (JAPAN ENERGY CORP), 13 décembre 1994 (1994-12-13)

## Description

La présente invention concerne un catalyseur d'hydrotraitement, son procédé de préparation et l'utilisation de ce catalyseur dans un procédé d'hydrotraitement et/ou d'hydrocraquage d'hydrocarbures, notamment d'hydrocarbures issus de coupes pétrolières de domaine d'ébullition compris entre 40 et 560°C.

Actuellement, la demande en composés hydrocarbonés désulfurés, désazotés et désaromatisés s'accroît et les fabricants développent des catalyseurs de plus en plus efficaces vis-à-vis de la purification des hydrocarbures. Cependant, ces nouveaux catalyseurs sont beaucoup plus coûteux et ne sont accessibles qu'auprès d'un nombre limité de producteurs. En outre, dès leur première régénération, ces catalyseurs présentent une activité souvent bien inférieure à leur activité initiale à l'état neuf dans les mêmes conditions opératoires. Un traitement supplémentaire de réactivation spécifique permet parfois de retrouver une activité proche de l'activité initiale et autorise ainsi la réutilisation du catalyseur pour un nouveau cycle d'hydrodésulfuration profonde et la production de distillats ayant des teneurs en soufre inférieures à 10 ppm. Plusieurs traitements de réactivation sont proposés sur le marché. Ils combinent généralement des étapes de régénération dans des conditions particulières, des traitements chimiques et thermiques et peuvent être associés à des sulfurations *ex situ* du catalyseur.

Aujourd'hui, de nombreux catalyseurs « classiques », à base de supports en oxyde(s) réfractaire(s) et contenant une combinaison de métaux des groupes VIB et VIII sont utilisés en raffinerie, à l'état neuf ou régénéré, soit en hydrotraitement, soit en hydrocraquage. S'il s'avère impossible d'augmenter notablement leur activité en désulfuration et/ou en déazotation, ces catalyseurs devront être récupérés, stockés ou détruits, lorsque les spécifications imposées aux carburants deviendront si restrictives qu'il ne sera plus possible de les utiliser. Ce stockage ou cette élimination de solides pourraient en outre être soumis à des contraintes environnementales et de sécurité et engendrer des surcoûts importants pour les raffineurs.

La Demanderesse a donc cherché, premièrement, à rendre plus efficaces des catalyseurs connus à base d'oxyde(s) réfractaire(s) et de métaux des groupes VIB et VIII, et de leur conférer des activités en désulfuration et en déazotation au moins équivalentes à celles des meilleurs catalyseurs du marché, et, deuxièmement, à améliorer l'activité de catalyseurs d'hydrotraitement régénérés afin d'augmenter le nombre de cycles de recyclage et de retarder leur mise au rebut et leur destruction.

Tous les catalyseurs d'hydrotraitement ou d'hydrocraquage contenant les métaux à l'état d'oxydes, pour être actifs, doivent nécessairement être sulfurés avant utilisation. Cette sulfuration peut être faite soit *in situ* dans le réacteur d'hydrotraitement de la raffinerie, soit *ex situ*. La sulfuration peut être réalisée au moyen de sulfure d'hydrogène, de mercaptans, de sulfures organiques, de polysulfures et/ou de soufre élémentaire, ces composés étant introduits seuls, en mélange avec un solvant ou en même temps que la charge.

Avant cette étape de sulfuration, certains de ces catalyseurs sont préalablement modifiés par un traitement avec des composés organiques chélatants ou complexants.

La sulfuration et la modification préalable peuvent se faire *in situ*, c'est-à-dire dans le réacteur d'hydrotraitement/hydroconversion, ou bien *ex situ*, c'est-à-dire dans un réacteur dédié. On peut également envisager une modification préalable *ex situ* combinée à une sulfuration *in situ* dans le réacteur d'hydrotraitement/ hydroconversion.

La gamme des composés organiques chélatants ou complexants utilisables est assez large. Il est ainsi connu de modifier ces catalyseurs au moyen d'acides de type thioglycolique ou encore de thioalcools, de composés thioacétoniques et de thiodiazoles ou encore de thiocyanates tels que proposés notamment par les demandes suivantes : EP 289211, EP 300629, EP 338788 , EP 357295, EP 456592, EP 478365 et EP 506206. D'autres catalyseurs ont été modifiés par traitement avec des composés organiques alcool-acides (EP 482817), de mono-, di- ou polyalcools éventuellement étherifiés (EP 601722, US 3954673, US 4012340, WO 01/76741), de composés de types urée, polyamines, EDTA, hydrazine et autres composés azotés (EP 181035, EP 335754, EP 1043069, WO 01/76741, US 3954673 et US 4012340). Des catalyseurs modifiés avec des monoesters en C₂₋₁₄ sont décrits dans les demandes de brevet EP 466 568 et EP 1046424, et des catalyseurs modifiés avec des diols saturées dans EP 1418002.

Tous ces composés visent à améliorer l'efficacité des catalyseurs en hydrotraitement, plus particulièrement en hydrodésulfuration. Cependant ces modifications ne permettent pas toujours d'accroître suffisamment les performances du catalyseur pour faire face aux spécifications concernant les teneurs en soufre des carburants qui ne cessent de devenir de plus en plus contraignantes pour les raffineurs. Ainsi par exemple, selon les directives du parlement européen et du conseil européen, les pays de la Communauté Européenne doivent produire du carburant diesel contenant moins de 50 ppm de soufre à partir de 2005 et moins de 10 ppm à l'horizon 2008 - 2011 alors que la norme 2004 est de 350 ppm. De même, pour tous les pays d'Amérique du Nord, la teneur en soufre du diesel devra passer de 500 ppm à 15 ppm à partir de 2006. Certains pays comme l'Allemagne devancent la législation européenne et imposent d'ores et déjà la vente de diesel à moins de 10 ppm. Des contraintes similaires s'appliquent déjà sur l'essence et les autres carburants. Cette évolution des spécifications impose des contraintes sur la production des raffineries, contraintes auxquelles les raffineurs doivent se plier au prix d'investissements souvent ruineux sur les unités d'hydrotraitement ou d'hydrocraquage et/ou, de façon beaucoup plus économique, grâce à l'amélioration des performances en désulfuration des catalyseurs actuels et la possibilité de les recycler plusieurs fois à leur plus haut niveau de performance.

Dans ce but, la Demanderesse a conçu un nouveau type de catalyseur d'hydrotraitement, à base d'oxydes réfractaires et de métaux des groupes VIB et VIII de la classification périodique des éléments, qui présente, après sulfuration, une activité fortement améliorée en désulfuration ainsi qu'en déazotation.

La présente invention a donc pour objet un catalyseur d'hydrotraitement d'hydrocarbures, comprenant un support à base d'au moins un oxyde réfractaire, au moins un métal du groupe VIII et au moins un métal du groupe VIB de la Classification Périodique des Eléments, caractérisé en ce qu'il comprend en outre le 2-butène-1,4-diol.

En effet, la Demanderesse a établi que la présence sur les catalyseurs du 2-butène-1,4-diol augmentait considérablement l'efficacité en désulfuration et en déazotation des catalyseurs, après activation par sulfuration dans des conditions connues. En utilisant ces nouveaux catalyseurs pour l'hydrotraitement d'hydrocarbures, on arrive, en comparaison a des catalyseurs équivalents n'ayant subi aucune modification préalable, à abaisser la température de réaction de désulfuration d'environ 5 à 25 °C, pour une teneur résiduelle de soufre donnée et toutes conditions opératoires étant identiques par aileurs (pression, quantité d'hydrogène et vitesse spatiale horaire (VVH)). Un tel gain d'activité permet d'envisager l'obtention de teneurs résiduelles en soufre nettement inférieures à 50 ppm, voire inférieures à 10 ppm, dans les hydrocarbures traités, en faisant varier les conditions oépratoires. Si l'unité est déjà en mesure de produire une coupe pétrolière à basse teneur en soufre, ce gain d'activité permettra de réduire la température du réacteur pour produire la teneur en soufre voulue, et de maintenir ainsi l'unité en service pour une durée supplémentaire pouvant atteindre plusieurs mots.

De préférence, le catalyseur de base est un catalyseur constitué d'un support d'oxyde réfractaire de type alumine, silice ou silice-alumine contenant de 0,1 à 10 % en poids d'au moins un métal du groupe VIII, de préférence du nickel et/ou du cobalt, et de 1 à 20% en poids d'au moins un métal du groupe VIB, de préférence du molybdène.

Le catalyseur peut être un catalyseur frais, c'est-à-dire non régénéré, provenant directement d'un fabricant, mais le prétraitement selon l'invention par un ou plusieurs composé de formule (I) est également intéressant lorsqu'il s'agit d'un catalyseur régénéré par un traitement chimique ou thermique approprié, par exemple par calcination.

Il est néanmoins connu que certains catalyseurs frais, du fait d'un mode de préparation spécifique, peuvent être plus ou moins réfractaires aux traitements préconisés. De la même manière, pour les mêmes raisons ou suite à des conditions opératoires particulières subies dans l'unité, les catalyseurs régénérés peuvent s'avérer plus ou moins réfractaires à ces traitements.

Le catalyseur selon l'invention contient de préférence au moins 0,001 mole de 2-butène-1,4-diol, en particulier de 0,001 mole à 10 moles, de préférence de 0,01 à 6 moles et de façon encore plus préférée de 0,1 à 3 moles de 2-butène-1,4-diol par mole de métaux des groupes VIB et VIII

L'invention a également pour objet un procédé de préparation du catalyseur d'hydrotraitement modifié décrit ci-dessus. Ce procédé de modification comprend la mise en contact d'un catalyseur comprenant un support à base d'au moins un oxyde réfractaire, au moins un métal du groupe VIII à l'état d'oxyde, et au moins un métal du groupe VIB à l'état d'oxyde, avec 2-butène-1,4-diol alcène-diols de formule (I) :

Selon l'invention, la mise en contact est généralement et de préférence une imprégnation.

Lorsque le 2-butène-1,4-diol est liquide à la température d'imprégnation, la mise en contact avec le catalyseur peut se faire en l'absence de solvant. La mise en contact du catalyseur non modifié avec le 2-butène-1,4-diol se fait de préférence par mise en contact du catalyseur avec une solution contenant l'agent organique. Le volume de solution peut être inférieur, égal ou supérieur au volume poreux du catalyseur. La méthode utilisant un volume de solution inférieur ou égal au volume poreux du catalyseur est parfois appelée « imprégnation à sec ». Lorsque le volume de solution est supérieur au volume poreux du catalyseur, l'excès de solution sera éliminé après l'adsorption du 2-butène-1,4-diol sur le catalyseur.

La mise en contact du catalyseur avec le 2-butène-1,4-diol peut se faire en présence d'au moins un solvant.

Lorsque la mise en contact se fait en présence de solvant, le 2-butène-1,4-diol est de préférence au moins partiellement soluble dans le solvant utilisé. Le choix du solvant revêt une importance particulière dans la mise en oeuvre du procédé. La sélection du solvant se base sur différents critères tels que son pouvoir solvant du 2-butène-1,4-diol, son effet dispersant du 2-butène-1,4-diol, son effet mouillant de la surface du catalyseur et sa disponibilité sur le marché à des conditions économiquement acceptables.

Parmi les solvants qu'on utilisera avantageusement dans l'invention, on peut citer l'eau, les fluides supercritiques tels que le dioxyde de carbone, les solvants aromatiques, aliphatiques, alicycliques, les coupes pétrolières, les solvants mono- et polyhydroxylés tels que l'éthanol, le tertio-butanol, l'éthylèneglycol, le diéthylèneglycol, le triéthylèneglycol, le propylèneglycol, le polyéthylèneglycol (PEG), le glycérol, les esters d'alkyle tel que l'acétate d'éthyle, les cétones tels que l'acétone ou la méthyléthylcétone, la N-métylpyrrolidone, les solvants contenant une fonction amide tels que le diméthylacétamide, les solvants contenant une fonction nitrile tel que l'acétonitrile, les carbonates d'alkyle tels que le carbonate d'éthyle, les éthers comme le tetrahydrofurane, des solvants soufrés comme le diméthylsulfoxide et le sulfolane, les acides comme l'acide acétique, et les solvants halogénés, ou un mélange de plusieurs de ces solvants.

Parmi ces solvants, on préfère en particulier l'eau, le toluène, les xylènes, l'éthylèneglycol, le diéthylèneglycol, le triéthylèneglycol, le glycérol, l'éthanol, le tertiobutanol, le polyéthylèneglycol (PEG), le plus souvent de poids moléculaire de 118 (le triéthylèneglycol) jusqu'à 1000, le white-spirit et l'éther de pétrole.

Le peut éventuellement être introduit en présence d'au moins un acide, généralement choisi parmi les acides carboxyliques, les acides hydrocarboxyliques et les acides polyacides (tels que les acides formique, acétique, glycolique, lactique, tartrique, maléique, citrique, glycérique, gluconique, methoxy-acétique, ethoxy-acétique, malonique, L(+) ascorbique, Salicylique, Oxalique, orthophtalique, succinique, glyoxylique...), les acides thiocarboxyliques (tels que les acides thiobenzoique, mercapto acétique, 1 et 2 mercapto-propionique, 2-3 dimercapto succinique, mercapto succinique, thioacétique, thioglycolique, thiodiglycolique, dithiodiglycolique...), les acides aminocarboxyliques (acide nitrilotriacétique, EDTA - pour « acide tétracétique éthylènediamine diammonium » ...). Certains de ces_acides ont déjà pu être cités précédemment en tant que solvants. Parmi ces acides, les acides particulièrement préférés sont les acides lactique, maléique, tartrique, citrique, succinique, oxalique, thioacétique, thioglycolique, nitriloacétique, et l'EDTA.

Le ou les acides peuvent être introduits avec le 2-butène-1,4-diol ou séparément, si, par exemple, le mélange obtenu n'est pas homogène. Dans ce cas, il peut être avantageux d'utiliser un solvant permettant l'introduction simultanée du ou des acides avec le 2-butène-1,4-diol le solvant assurant alors la dissolution de tous les composés organiques présents. Enfin, il est également possible lorsque le ou les acides sont introduits séparément (avant ou après, de préférence avant), du 2-butène-1,4-diol d'utiliser un solvant différent de celui employé pour introduire le 2-butène-1,4-diol.

La mise en contact du catalyseur, optionnellement préalablement séché entre 10 et 600°C, de préférence de préférence entre 15 et 300°C, et de manière plus préférentielle de 20 à 180°C, avec une solution de 2-butène-1,4-diol lors de l'étape d'imprégnation peut durer de 1 minute à 7 jours, de préférence de 10 minutes à 8 heures, à une température comprise entre 0 °C et 200°C, de préférence à température ambiante, à une faible pression comprise entre la pression atmosphérique et 5 bars, de préférence à pression atmosphérique. Dans le cas où une solution d'acide(s) est introduite_avant la solution de 2-butène-1,4-diol, les conditions opératoires de l'imprégnation avec le ou les acides sont similaires à celles de l'imprégnation avec le 2-butène-1,4-diol. Dans le cas optionnel où le catalyseur est séché, on peut avantageusement profiter de la chaleur résiduelle du catalyseur pour pratiquer une imprégnation à chaud.

A la fin de l'étape d'imprégnation, le catalyseur peut être soumis, éventuellement après élimination d'un excès de solution d'imprégnation, à une étape de maturation optionnelle à une température généralement de 0 à 100°C, de préférence de la température ambiante (environ 20°C) à 80°C, généralement à pression atmosphérique ou jusqu'aux pressions généralement mise en oeuvre dans les procédés d'hydrotraitement ou d'hydroconversion, dont la durée peut être comprise entre quelques minutes et quelques années, dans le cas où le catalyseur resterait stocké en fûts. De préférence, l'étape de maturation peut durer de quelques minutes à 2 jours. Un traitement thermique optionnel, consécutif à l'étape de maturation, peut être effectué à des températures de 50°C à 250°C , de préférence de 60 à 180°C, de durée de quelques minutes à plusieurs jours, de préférence de 30 minutes à 3 heures sous atmosphère inerte ou non, avec ou sans débit gazeux, généralement à pression atmosphérique ou jusqu'aux pressions généralement mises en oeuvre dans les procédés d'hydrotraitement ou d'hydroconversion.

Les étapes optionnelles de maturation et de traitement thermique peuvent être omises lorsque le catalyseur est chargé directement dans l'unité d'hydrotraitement ou d'hydroconversion.

Le catalyseur modifié par imprégnation avec le 2-butène-1,4-diol est parfaitement stable à température ambiante et à l'air. La modification du catalyseur peut par conséquent se faire *ex situ*, c'est-à-dire en dehors d'un réacteur d'hydrotraitement, généralement d'hydroconversion, et il s'agit là d'un mode de réalisation préféré du procédé selon l'invention. La mise en oeuvre *ex situ* du procédé selon l'invention peut éventuellement être combinée à une sulfuration *ex situ* du catalyseur modifié selon l'invention. Ceci permet au raffineur d'acheter un produit immédiatement prêt à l'emploi et de réduire le plus possible les pertes de temps au démarrage de l'unité.

Il est également intéressant de réaliser l'étape de modification du catalyseur par le 2-butène-1,4-diol *ex situ*, et de sulfurer le catalyseur modifié *in situ* dans le réacteur d'hydrotraitement. Dans ce cas, la mise en place du catalyseur dans l'unité de traitement est plus aisée car le catalyseur non sulfuré, contrairement au catalyseur sulfuré, ne risque pas de s'auto-enflammer.

Une autre variante encore consiste à mettre en oeuvre a la fois la modification du catalyseur et la sulfuration consécutive *in situ*. Dans ce cas, le procédé de préparation selon l'invention est caractérisé par le fait que la mise en contact du catalyseur avec le 2-butène-1,4-diol se fait en présence d'hydrogène et d'au moins un agent de sulfuration choisi de préférence parmi l'hydrogène sulfuré, le soufre élémentaire, le CS₂, les mercaptans, les sulfures et/ou polysulfures, les coupes hydrocarbonées à point d'ébullition inférieur à 400 °C contenant des composés soufrés, généralement au sein d'un réacteur d'hydrotraitement.

Il convient de noter que, même lorsque la modification du catalyseur par le 2-butène-1,4-diol se fait *in situ* dans le réacteur d'hydrotraitement, ces deux opérations constituent généralement deux étapes distinctes réalisées l'une après l'autre, la mise en contact avec le 2-butène-1,4-diol précédant toujours l'étape de sulfuration. Mais ces deux étapes peuvent aussi être conduites simultanément.

Outre l'imprégnation des composés organiques dans les pores d'un catalyseur frais ou régénéré, il est également possible d'introduire lesdits composés organiques au cours de la fabrication/mise en forme du catalyseur. On peut par exemple incorporer le 2-butène-1,4-diol au support avant même le dépôt des composés des métaux des groupes VIB et VIII. Ceci peut être fait par mélange du 2-butène-1,4-diol avec les composants du support avant la mise en forme de celui-ci, ou encore par imprégnation du support mis en forme avec les composés organiques.

Une autre possibilité consiste à introduire le 2-butène-1,4-diol et les composés des métaux des groupes VIB et VIII simultanément, soit en les mélangeant aux composants du support avant mise en forme, soit par imprégnation d'un support déjà mis en forme avec à la fois le 2-butène-1,4-diol et les sels des métaux des groupes VIB et VIII. L'une ou l'autre des opérations peut être suivie d'un séchage, réalisé dans des conditions telles qu'une partie au moins des composés organiques soit conservé dans le catalyseur.

Il est également possible d'incorporer le 2-butène-1,4-diol seulement après les sels des métaux des groupes VIB et VIII. L'une ou l'autre de ces étapes peut éventuellement être suivie d'un séchage et/ou d'une calcination dans des conditions telles qu'une partie au moins des composés soit conservée dans le catalyseur.

Le 2-butène-1,4-diol peuvent être introduits dans le catalyseur sous forme liquide et/ou solide particulaire et/ou encore sous forme de solution ou suspension dans un solvant approprié.

L'invention a en outre pour objet un procédé d'activation *in situ* ou *ex situ* d'un catalyseur d'hydrotraitement tel que décrit ci-dessus. Cette activation se fait par mise en présence du catalyseur, simultanément ou successivement, avec de l'hydrogène et au moins un agent de sulfuration choisi de préférence parmi l'hydrogène sulfuré, le soufre élémentaire, le CS2, les mercaptans, les sulfures et/ou polysulfures, les coupes hydrocarbonées à point d'ébullition inférieur à 400 °C contenant des composés soufrés. Un agent de sulfuration préféré est le disulfure de diméthyle (DMDS).

L'agent de sulfuration peut être introduit sous forme de gaz ou sous forme diluée dans un solvant, ou comme additif de la charge à hydrotraiter.

L'invention a enfin pour objet l'utilisation du catalyseur ainsi activé *in situ* ou *ex situ*, pour l'hydrotraitement et/ou l'hydrocraquage d'hydrocarbures, en particulier d'hydrocarbures issus de coupes pétrolières de point d'ébullition compris entre 40 et 560°C.

Les exemples donnés dans la suite de la présente description visent à illustrer et non à limiter l'invention.

### EXEMPLE 1 - Amélioration de l'activité d'un catalyseur commercial existant

### Exemple 1

Dans le présent exemple, on décrit un mode de préparation d'un catalyseur selon l'invention.

On part d'un catalyseur commercial (catalyseur A), constitué d'une combinaison à 3 % en poids de cobalt et à 10 % en poids de molybdène supporté sur alumine, disponible sur le marché et utilisé communément par les raffineurs dans les unités d'hydrodésulfuration.

La modification de ce catalyseur A par un composé de formule (I) se fait de la manière suivante : 250 g du catalyseur A sont placés dans le ballon d'un évaporateur rotatif mis en rotation à 45 tours par minute. 138 g de 2-butène-1,4-diol sont injectés en 35 minutes au coeur du catalyseur. Le solide imprégné est laissé pendant 16 heures en rotation lente (20 tours par minutes). On obtient ainsi un catalyseur d'apparence sèche.

Après 20 jours à température ambiante, on charge 100 ml de ce catalyseur dans le réacteur d'une unité pilote de désulfuration de gazole en vue de la réalisation d'un essai d'activité tel que décrit dans l'exemple 1 - 2 ci-après. Après chargement, le catalyseur subit un traitement thermique à 180 °C pendant 2 heures, puis à 150 °C pendant 14 heures, le tout sous un courant d'azote de 20 1/h. Le catalyseur ainsi obtenu est appelé catalyseur B.

### Exemple 1-2

Dans le présent exemple on compare l'activité en hydrodésulfuration et en hydrodéazotation du catalyseur B ayant subi une modification selon l'invention (Exemple I-1) à celle du catalyseur A n'ayant subi aucun traitement de modification.

Chacun des catalyseurs A (non modifié) et B (modifié selon l'invention) est sulfuré par un gazole additivé par du disulfure de diméthyle (DMDS) selon la procédure recommandée par le fabricant du catalyseur.

Après sulfuration et stabilisation des catalyseurs A et B, on introduit une charge comprenant un mélange de 70 % en poids de gazole et 30 % en poids d'une coupe hydrocarbonée de type LCO (*Light Cycle Oil*) issue du craquage catalytique. Les caractéristiques de cette charge, avant hydrotraitement, sont indiquées dans le Tableau I.1 ci-après.

**TABLEAU I.1**

| Type de charge | Mélange 30 % LCO-70 % gazole |
|---|---|
| Soufre (ppm) | 9074 |
| Densité à 15 °C (g/ml) | 0,8863 |
| Monoaromatiques (% en poids) | 20,7 |
| Diaromatiques (% en poids) | 21,3 |
| Triaromatiques (% en poids) | 3,8 |
| Σ Aromatiques (% en poids) | 45,8 |
| Azote (ppm) | 389 |
| Distillation selon la norme ASTM D86 (°C) | |
| Point initial | 180 |
| 5 % vol | 224 |
| 50 % vol | 291 |
| 95 % vol | 360 |
| point final | 361 |

On met en oeuvre la réaction d'hydrotraitement sous une pression de 27.10⁵ Pa (27 bars) avec un rapport hydrogène/hydrocarbures (H₂/HC) de 250 N1/1 à une vitesse spatiale horaire (VVH) de 1h⁻¹.

Les activités en désulfuration sont comparées en déterminant, pour chaque catalyseur, la température réactionnelle correspondant à un taux de désulfuration de 99 %. Plus cette température, pour le catalyseur B selon l'invention, est basse en comparaison à la température correspondante pour le catalyseur de référence A, plus ce catalyseur est actif en désulfuration.

Les résultats obtenus sont représentés dans le tableau 1 - 2 sous forme d'écart de température (ΔT) par rapport à la température de référence du catalyseur A (T_{HDS}). Ils correspondant à la température requise pour atteindre un taux de désulfuration de 99 %.

**TABLEAU I.2**

| Catalyseur | A | B |
|---|---|---|
| HDS | T_{HDS} | T_{HDS} - 7 °C |

On constate que le catalyseur B selon l'invention permet d'atteindre un taux de désulfuration de 99 % à une température inférieure de 7 °C à celle nécessaire pour le catalyseur A. Il a donc une activité en hydrodésulfuration supérieure à celle du catalyseur A

Pour comparer les activités en déazotation, on mesure, pour chaque catalyseur, la teneur résiduelle en azote pour une température réactionnelle T_{HDN} donnée. Plus cette teneur résiduelle en azote est basse, plus le catalyseur est actif en déazotation.

Les résultats obtenus sont représentés dans le tableau I - 3.

**TABLEAU I.3**

| Catalyseur | A | B |
|---|---|---|
| N résiduel à T_{HDN} (ppm) | 120 | 92 |

On constate que le catalyseur B selon l'invention permet d'abaisser plus fortement la teneur résiduelle en azote de la charge que le catalyseur A ce qui montre qu'il est également plus actif en déazotation.

### EXEMPLE II - réjuvénation d'un catalyseur régénéré

Le catalyseur C est un catalyseur CoMo commercial hautement performant, disponible sur le marché. Après un cycle en unité, il est déchargé et régénéré (combustion du soufre et du coke résiduels sous air). Un catalyseur régénéré de ce type présente en général une activité en retrait de quelques degrés à plus d'un dizaine de degrés selon la sévérité du cycle en unité, la quantité de polluants (Na, V, Ni, Pb, As, Si...) qu'il contient, l'altération de ses caractéristiques physiques (surface spécifique, volume poreux...) et la qualité de la régénération.

On considère un catalyseur C régénéré industriellement. Ce catalyseur est appelé catalyseur D.

### Exemple II-1 (selon l'invention)

Dans le présent exemple, on décrit un mode de réjuvénation d'un catalyseur selon l'invention.

Le catalyseur D est modifié par un composé de formule (I) de la manière suivante : 255 g du catalyseur D sont placés dans le ballon d'un évaporateur rotatif mis en rotation à 45 tours par minute. 120 g de 2-butène-1,4-diol sont injectés en 35 minutes au coeur du catalyseur. Le solide imprégné est laissé pendant 16 heures en rotation lente (20 tours par minutes). On obtient ainsi un catalyseur d'apparence sèche.

Après 20 jours à température ambiante, on charge 100 ml de ce catalyseur dans le réacteur d'une unité pilote de désulfuration de gazole en vue de la réalisation d'un essai d'activité tel que décrit dans l'exemple II-4 ci-après. Après chargement, le catalyseur subit un traitement thermique à 180 °C pendant 2 heures sous un courant d'azote de 20 N1/h. Le catalyseur ainsi obtenu est appelé catalyseur E.

### Exemple II-2 (selon l'invention)

Dans le présent exemple, on décrit un mode de réjuvénation d'un catalyseur selon l'invention.

Le catalyseur D est modifié par un composé de formule (I) de la manière suivante : 300 g du catalyseur D sont placés dans le ballon d'un évaporateur rotatif mis en rotation à 45 tours par minute. 54 g (0,6 moles) de 2-butène-1,4-diol dilués dans 94 ml d'eau sont injectés en 35 minutes au coeur du catalyseur. Le solide imprégné est laissé pendant 48 heures en maturation puis traité thermiquement dans le rotavapor pendant 2h à 140°C sous azote (GHSV 83 h⁻¹). On obtient ainsi un catalyseur d'apparence sèche. Le catalyseur ainsi obtenu est appelé catalyseur F.

### Exemple II-3 (comparatif)

Dans le présent exemple, on décrit un mode de réjuvénation d'un catalyseur selon une procédure identique à celle appliquée dans l'exemple II-2, mais en remplaçant le 2-butène-1,4-diol par une quantité équivalente (en moles) d'un diol ne contenant pas de double liaison carbone=carbone l'éthylène glycol. L'éthylène glycol est l'une des molécules les plus fréquemment citées dans l'art antérieur pour la préparation et l'amélioration des performances des catalyseurs d'HDS.

On considère le catalyseur D modifié par un diol saturé : l'éthylène glycol. Le catalyseur D est modifié de la manière suivante : 300 g du catalyseur D sont placés dans le ballon d'un évaporateur rotatif mis en rotation à 45 tours par minute. 40 g (0,6 moles) d'éthylène glycol dilués dans 108 ml d'eau sont injectés en 35 minutes au coeur du catalyseur. Le solide imprégné est laissé pendant 48 heures en maturation puis traité thermiquement pendant 2h à 140°C. On obtient ainsi un catalyseur d'apparence sèche. Le catalyseur ainsi obtenu est appelé catalyseur G.

### Exemple II-4 (Evaluation des activités catalytiques)

Dans le présent exemple on compare l'activité en hydrodésulfuration et en hydrodéazotation des catalyseurs E, F et G ayant subi une modification (Exemples II-1 à II-3) à celle du catalyseur D n'ayant subi aucun traitement de modification.

Les quantités de catalyseur chargé sont toujours égales à 100 ml.

Le catalyseur de référence D est séché dans le réacteur 4 h à 120°C sous un débit de 10 Nl/h d'azote. Le catalyseur C et les catalyseurs modifiés ne subissent pas de séchage.

Chacun des catalyseurs, modifié ou non, est sulfuré par un gazole additivé avec 2,5 % en poids de disulfure de diméthyle (DMDS) selon la procédure, recommandée par le fabricant du catalyseur.

Après sulfuration, puis stabilisation sous gazole de distillation directe, on introduit une charge comprenant un mélange de 80 % en poids de gazole et 20 % en poids d'une coupe hydrocarbonée de type LCO (*Light Cycle Oil*) issue du craquage catalytique. Les caractéristiques de cette charge, avant hydrotraitement, sont indiquées dans le Tableau II.I ci-après.

**TABLEAU II.1**

| Type de charge | Mélange 20 % LCO-80 % gazole |
|---|---|
| Soufre (ppm) | 10915 |
| Densité à 15 °C (g/ml) | 0,8631 |
| Monoaromatiques (% en poids) | 19 |
| Diaromatiques (% en poids) | 14.7 |
| Triaromatiques (% en poids) | 1.8 |
| Σ Aromatiques (% en poids) | 35.5 |
| Azote (ppm) | 279 |
| Distillation selon la norme ASTM D86 (°C) | |
| Point initial | 171 |
| 5 % vol | 235 |
| 50 % vol | 289 |
| 95 % vol | 355 |
| point final | 356 |

On met en oeuvre la réaction d'hydrotraitement sous une pression de 27.10⁵ Pa (27 bars) avec un rapport hydrogène/hydrocarbures (H₂/HC) de 250 N1/1 à une vitesse spatiale horaire (WH) de 1h⁻¹.

Pour comparer les activités en désulfuration, on ajuste, pour chaque catalyseur, la température réactionnelle à une valeur correspondant à un taux de désulfuration de 99,5 %. Plus cette température est basse en comparaison à la température correspondante pour le catalyseur de référence, plus le catalyseur considéré est actif en désulfuration.

Les résultats obtenus sont représentés dans le tableau II.2 sous forme d'écart de température (ΔT) par rapport à la température de référence du catalyseur C (T_{HDS}) correspondant à la température requise pour atteindre un taux de désulfuration de 99,5 %.

**TABLEAU II.2**

| Catalyseur | C | D | E | F | G |
|---|---|---|---|---|---|
| HDS | THDS | T_{HDS} + 9 °C | T_{HDS} - 3 °C | T_{HDS} + 1 °C | T_{HDS} + 10,5 °C |

On constate que le catalyseur E selon l'invention permet d'atteindre un taux de désulfuration de 99,5 % à une température inférieure de °C à celle nécessaire pour ie catalyseur C. Il a donc une activité en hydrodésulfuration supérieure à celle du catalyseur C et ceci, en dépit du fait qu'il a été préparé à partir du catalyseur D, moins actif de 9°C par rapport au catalyseur C. Le gain d'activité par rapport au catalyseur D de départ est donc de 12°C.

Le catalyseur F selon l'invention permet d'atteindre un taux de désulfuration de 99,5 % à une température supérieure de 1 °C à celle nécessaire pour le catalyseur C. Il a donc une activité en hydrodésulfuration à peine inférieure à celle du catalyseur C. Le gain d'activité par rapport au catalyseur D de départ est donc de 8°C.

Le catalyseur comparatif G n'atteint un taux de désulfuration de 99,5 % qu'à une température supérieure de 10,5 °C par rapport à celle nécessaire pour le catalyseur C. Il a donc une activité en hydrodésulfuration très inférieure à celle du catalyseur C et même légèrement inférieure à celle du catalyseur D de départ. La perte d'activité par rapport au catalyseur D de départ est de 1,5°C.

On voit sur ces exemples que le traitement selon l'invention permet de récupérer une activité équivalente (+1°C) voire supérieure (-3°C) à celle du catalyseur frais, bien que le catalyseur régénéré présente une activité très inférieure à celle de ce même catalyseur frais. En revanche, l'utilisation de l'éthylène glycol dans les mêmes conditions conduit à une perte d'activité du catalyseur régénéré au lieu de l'amélioration attendue.

## Revendications

1. Catalyseur d'hydrotraitement, comprenant un support a base d'au moins un oxyde réfractaire, au moins un métal du groupe VIII et au moins un métal du groupe VIB de la Classification Périodique des Eléments, caractère en ce qu'il comprend en outre le 2,-butène-1,4-diol.

2. Catalyseur selon la revendication 1 **caractérisé en ce qu'**il comprend au moins 0,00 1 mole de 2-butène-1,4-diol par le de métaux des groupes VIB et VIII.

3. A Catalyseur selon la revendication 2, **caractérisé en ce qu'**il comprend de 0,001 à 10 moles de 2-butène-1,4-diol par mole de métaux des groupes VIB et VIII

4. Procède de preparation d'un catalyseur d'hydroconversion selon l'une des revendications precédentes, comprenant la mise en contact d'un catalyseur comprenant un support à base d'au moins un oxyde refractaire, au moins un métal du groupe VIII, et au moins un metal du groupe VIB, avec le 2, -butène-1,4- diol.

5. Procédé de préparation selon la des revendication 4, cacactérisé par le fait que le catalyseur comprenant un support a base d'au moins un oxyde réfractaire, au mo ns un metal du groupe VIII et au moins un metal du groupe VIB est un catalyseur regenéré.

6. Procédé de preparation selon la revendication 4 ou 5, tel que la mise en contact est suivie d'au moins, une étape de maturation à une température généralement de 0 a 100°C, dont la durée est comprise entre quelques minutes et quelques années, ladite étape de maturation étant eventuellement suivie d'au moins une étape de traitement thermique, a une température de 50 a 250°C, et de durée de quelques minutes a plusieurs jours

7. Procédé de préparation selon l'une des revendications 4 à 5, **caractérisé par le fait que** la mise en contact du catalyseur avec le 2-butène-1,4-diol se fait en présence d' au moins un solvant et/ou d'au moins un acide.

8. Procède de pre-paration selon la revendication précédente, **caractérisé par le fait que** le 2-butène-1,4-diol est (sont) au moins partiellement soluble(s) dans le solvant utilisé.

9. Procède de préparation selon la revendication 7 ou 8, **caractérisé par le fait que** le solvant est choisi parmi l'eau, le toluène, les xylênes, l'êthylèneglycol, le diéthyléneglycol, le triethylèneglycol, le glycérol, l'ethanol, le tertiobutanol, le polyethylèneglycol (PEG), le plus souvent de poids moléculaire de 118 (le triéthyléneglycol) jusqu,a 1000, le white-spirit et l'ether de pétrole

10. Procédè de preparation selon l'une des revendications 4 à 9, **caractérisé par le fait que** la mise en contact du catalyseur avec le 2-butène-1,4-diol se fait ex situ, en dehors du réacteur d'hydrotraitement

11. Procédé de préparation selon l'une des revendications 4 à 10, **caractérisé par le fait que** la mise en contact du catalyseur avec le 2-butène-1,4-diol se fait en présence d'hydrogène est d'au moins un agent de sulfuration choisi de préférence parmi l'hydrogène sulfuré, le sourire élémentaire, le CS₂, les mercaptans, les sulfures et/ou polysulfures, les coupes hydrocarbonêes a point d'ébullition inférieur a 400 °C contenant des composés soufrés, généralement au sein d'un réacteur d'hydrotraitement.

12. Procédé d'activation *in situ* ou *ex situ* d'un catalyseur d'hydrotraitement selon l'une quelconque des revendications 1 à 3, **caractérisé par le fait que** ledit catalyseur est mis en présence d'hydrogène et d'au moins un agent de sulfuration choisi de préférence parmi l'hydrogène sulfuré, le soufre élémentaire, le CS2, les mercaptans, les sulfures, et/ou polysulfures, les coupes hydrocarbonées a point d'ébullition inférieur à 400 °C contenant des composés soufrés

13. Procède d'activation selon la revendication précédente, caratérisé par le lait que l'agent, de sulfuration est le disulfure de diméthyle.

14. Utilisation du catalyseur d'hydrotraitement activé par un procédé selon la revendication 12 ou 13, pour l'hydrotraitement et/ou l'hydrocraquage d'hydrocarbures, en particulier d'hydrocarbures issus de coupes pètrolières de point d'ébullition compris entre 40 et 560°C.

## Patentansprüche

1. Katalysator für die Hydrobehandlung, enthaltend einen Träger auf der Basis zumindest eines feuerfesten Oxids, zumindest ein Metall der Gruppe VIII und zumindest ein Metall der Gruppe VIB des Periodensystems der Elemente,
**dadurch gekennzeichnet, dass** er außerdem 2-Buten-1,4-diol enthält.

2. Katalysator gemäß Anspruch 1, **dadurch gekennzeichnet, dass** er zumindest 0,001 Mol 2-Buten-1,4-diol pro Mol der Metalle der Gruppen VIB und VIII enthält.

3. Katalysator gemäß Anspruch 2, **dadurch gekennzeichnet, dass** er 0,001 bis 10 Mol 2-Buten-1,4-diol pro Mol der Metalle der Gruppen VIB und VIII enthält.

4. Verfahren zum Zubereiten eines Katalysators für die Hydrobehandlung gemäß einem der vorigen Ansprüche, enthaltend das Inkontaktbringen eines Katalysators, der einen Träger auf der Basis zumindest eines feuerfesten Oxids, zumindest ein Metall der Gruppe VIII und zumindest ein Metall der Gruppe VIB enthält, mit dem 2-Buten-1,4-diol.

5. Zubereitungsverfahren gemäß Anspruch 4, **dadurch gekennzeichnet, dass** der Katalysator, der einen Träger auf der Basis zumindest eines feuerfesten Oxids, zumindest ein Metall der Gruppe VIII und zumindest ein Metall der Gruppe VIB enthält, ein regenerierter Katalysator ist.

6. Zubereitungsverfahren gemäß Anspruch 4 oder 5, **dadurch gekennzeichnet, dass**
dem Inkontaktbringen zumindest ein Schritt der Reifung bei einer Temperatur im Allgemeinen von 0 bis 100 °C folgt, dessen Dauer zwischen einigen Minuten und einigen Jahren liegt,
wobei dem Schritt der Reifung eventuell zumindest ein Schritt der Wärmebehandlung bei einer Temperatur von 50 bis 250 °C und mit einer Dauer von einigen Minuten bis mehreren Tagen folgt.

7. Zubereitungsverfahren gemäß einem der Ansprüche 4 bis 6, **dadurch gekennzeichnet, dass** das Inkontaktbringen des Katalysators mit dem 2-Buten-1,4-diol in Gegenwart zumindest eines Lösungsmittels und/oder zumindest einer Säure durchgeführt wird.

8. Zubereitungsverfahren gemäß dem vorigen Anspruch, **dadurch gekennzeichnet, dass** das 2-Buten-1,4-diol in dem verwendeten Lösungsmittel zumindest teilweise löslich ist.

9. Zubereitungsverfahren gemäß Anspruch 7 oder 8, **dadurch gekennzeichnet, dass** das Lösungsmittel gewählt ist aus Wasser, Toluol, den Xylolen, Ethylenglycol, Diethylenglycol, Triethylenglycol, Glycerol, Ethanol, tert-Butanol, Polyethylenglycol (PEG), am häufigsten mit einem Molekulargewicht von 118 (von Triethylenglycol) bis zu 1000, White Spirit und Petrolether.

10. Zubereitungsverfahren gemäß einem der Ansprüche 4 bis 9, **dadurch gekennzeichnet, dass** das Inkontaktbringen des Katalysators mit dem 2-Buten-1,4-diol ex situ außerhalb des Reaktors für die Hydrobehandlung durchgeführt wird.

11. Zubereitungsverfahren gemäß einem der Ansprüche 4 bis 10, **dadurch gekennzeichnet, dass** das Inkontaktbringen des Katalysators mit dem 2-Buten-1,4-diol im Allgemeinen im Inneren eines Reaktors für die Hydrobehandlung in Gegenwart von Wasserstoff und zumindest einem Aufschwefelungsmittel durchgeführt wird, das vorzugsweise gewählt ist aus Schwefelwasserstoff, elementarem Schwefel, CS₂, den Mercaptanen, den Sulfiden und/oder den Polysulfiden und den Verschnitten von Kohlenwasserstoffen mit einem Siedepunkt von weniger als 400 °C, die Schwefelverbindungen enthalten.

12. Verfahren zum In-Situ- oder Ex-Situ-Aktivieren eines Katalysators für die Hydrobehandlung gemäß einem der Ansprüche 1 bis 3, **dadurch gekennzeichnet, dass** der Katalysator gleichzeitig oder aufeinanderfolgend in die Gegenwart von Wasserstoff und zumindest einem Aufschwefelungsmittel gebracht wird, das vorzugsweise gewählt ist aus Schwefelwasserstoff, elementarem Schwefel, CS₂, den Mercaptanen, den Sulfiden und/oder den Polysulfiden und den Verschnitten von Kohlenwasserstoffen mit einem Siedepunkt von weniger als 400 °C, die Schwefelverbindungen enthalten.

13. Aktivierungsverfahren gemäß dem vorigen Anspruch, **dadurch gekennzeichnet, dass** das Aufschwefelungsmittel Dimethyldisulfid ist.

14. Verwendung eines Katalysators für die Hydrobehandlung, der nach einem Verfahren gemäß Anspruch 12 oder 13 aktiviert wurde, für die Hydrobehandlung und/oder das Hydrocracken von Kohlenwasserstoffen, insbesondere von Kohlenwasserstoffen, die aus Ölverschnitten mit einem Siedepunkt stammen, der zwischen 40 und 560 °C liegt.

## Claims

1. A hydroprocessing catalyst comprising a carrier based on at least one refractory oxide, at least one metal of group VIII and at least one metal of group VIB of the Periodic Table of Elements, **characterized in that** it also comprises 2-butene-1, 4- diol.

2. The catalyst as claimed in claim 1, **characterized in that** it comprises at least 0.001 mol of 2-butene-1, 4- diol per mole of metals of groups VIB and VIII.

3. The catalyst as claimed in claim 2, **characterized in that** it comprises from 0.001 to 10 mol of 2-butene-1, 4- diol per mole of metals of groups VIB and VIII.

4. A method for preparing a hydroconversion catalyst as claimed in one of the preceding claims, comprising bringing a catalyst comprising a carrier based on at least one refractory oxide, at least one metal of group VIII in the oxide state and at least one metal of group VIB in the oxide state into contact with 2-butene-1, 4-diol.

5. The method of preparation as claimed in claim 4, **characterized in that** the catalyst comprising a carrier based on at least one refractory oxide, at least one metal of group VIII in the oxide state and at least one metal of group VIB in the oxide state is a regenerated catalyst.

6. The method of preparation as claimed in claims 4 or 5, such that the bringing into contact is followed by at least one maturation step, at a temperature generally of from 0 to 100°C, the duration of which is between a few minutes and a few years, said maturation step being optionally followed by at least one heat treatment step, at a temperature of from 50 to 250°C, and lasting from a few minutes to several days.

7. The method of preparation as claimed in one of claims 5 to 8, **characterized in that** the catalyst is brought into contact with 2-butene-1, 4- diol in the presence of at least one solvent and/or of at least one acid.

8. The method of preparation as claimed in the preceding claim, **characterized in that** 2-butene-1, 4-diol is at least partially soluble in the solvent used.

9. The method of preparation as claimed in claim 7 or 8, **characterized in that** the solvent is selected from water, toluene, xylenes, ethylene glycol, diethylene glycol, triethylene glycol, glycerol, ethanol, tert-butanol, polyethylene glycol (PEG), most commonly of molecular weight from 118 (triethylene glycol) to 1000, white spirit and petroleum ether.

10. The method of preparation as claimed in one of claims 4 to 9, **characterized in that** the catalyst is brought into contact with 2-butene-1, 4- diol *ex situ*, outside the hydroprocessing reactor.

11. The method of preparation as claimed in one of claims 4 to 10, **characterized in that** the catalyst is brought into contact with 2-butene-1, 4- diol in the presence of hydrogen and of at least one sulfurization agent preferably selected from hydrogen sulfide, elemental sulfur, CS₂, mercaptans, sulfides and/or polysulfides, and hydrocarbon fractions with a boiling point of less than 400°C containing sulfur compounds, generally in a hydroprocessing reactor.

12. A method for the *in situ* or *ex situ* activation of a hydroprocessing catalyst as claimed in any one of claims 1 to 3, **characterized in that** said catalyst is placed in the presence of hydrogen and of at least one sulfurization agent preferably selected from hydrogen sulfide, elemental sulfur, CS₂, mercaptans, sulfides and/or polysulfides, and hydrocarbon fractions with a boiling point of less than 400°C containing sulfur compounds.

13. The method of activation as claimed in the preceding claim, **characterized in that** the sulfurization agent is dimethyl disulfide.

14. The use of the hydroprocessing catalyst activated by means of a method as claimed in claim 12 or 13, for the hydroprocessing and/or hydrocracking of hydrocarbons, in particular of hydrocarbons derived from petroleum fractions with a boiling point of between 40 and 560°C.
